Europäisches Patentamt

European Patent Office

Office européen des brevets

(11) Publication number: **0 253 626 B1**

# EUROPEAN PATENT SPECIFICATION

(45) Date of publication of patent specification: **13.05.92** (51) Int. Cl.⁵: **G11B 25/04**, G11B 33/02, G11B 33/12

(21) Application number: **87306216.0**

(22) Date of filing: **14.07.87**

(54) **Magnetic disc device.**

(30) Priority: **18.07.86 JP 109458/86 U**

(43) Date of publication of application:
**20.01.88 Bulletin 88/03**

(45) Publication of the grant of the patent:
**13.05.92 Bulletin 92/20**

(84) Designated Contracting States:
**DE GB IT**

(56) References cited:
**EP-A- 0 166 963**        **EP-A- 0 204 299**
**FR-A- 2 565 017**        **GB-A- 2 092 834**
**US-A- 4 194 225**        **US-A- 4 568 988**

(73) Proprietor: **FUJITSU LIMITED**
**1015, Kamikodanaka Nakahara-ku**
**Kawasaki-shi Kanagawa 211(JP)**

(72) Inventor: **Mihara, Takahisa**
**5-6-1-106, Kamitsuruma**
**Sagamihara-shi Kanagawa 228(JP)**
Inventor: **Saito, Sigeo**
**4-18-206, Minamidai 1-chome**
**Sagamihara-shi Kanagawa 228(JP)**

(74) Representative: **Rackham, Stephen Neil et al**
**GILL JENNINGS & EVERY 53-64 Chancery**
**Lane**
**London WC2A 1HN(GB)**

## Description

The present invention relates to a magnetic disc device used as a memory means for, for example, a mini-computer or a micro-computer.

Conventionally, a magnetic disc device using a hard disc 3.5 inches (88 mm) in diameter is used as such a memory means, and is required to have a high memory density.

A prior art magnetic disc device comprises magnetic discs rotatably supported within a case, magnetic heads for read/write operations on the magnetic discs, and a head actuator for driving the magnetic heads on the magnetic disc surface to read/write information data from and to the magnetic disc. Such devices are described in US 4,568,988 and in GB 2,092,834.

The above-mentioned prior art magnetic disc device can hold only one or two magnetic discs, and this does not meet the present requirements for a high memory density. However, if the number of magnetic discs is increased, in order to enrich the memory density, the overall height of the magnetic disc device must be increased, and thus compatibility with conventional magnetic disc devices is lost. Attempts have been made to increase the number of magnetic discs whilst making the overall size of the device as small as possible. In US 4,194,255 a motor offset from the level of the head actuator is used to create a cooling airflow in the device as well as rotating the hub. By having one component doing many tasks, the device size may be reduced.

Also, the prior art magnetic disc device comprises a printed circuit board of substantially the same size as the base of the case and attached to the outside of the base. Various control circuits for driving the magnetic disc device are mounted on the printed circuit board.

Regarding the magnetic disc device using 5 inch (125 mm) diameter discs, all of the necessary control circuits can be mounted on one printed circuit board, since the case is relatively large, and thus a large printed circuit board is attached to the case. However, for the magnetic disc device using 3.5 inch ( 88 mm) diameter discs, all of the control circuits cannot be mounted on one printed circuit board having a relatively small size corresponding to the small sized case, and therefore, two printed circuit boards must be attached to the outside of the case, which increases the height of the magnetic disc device and impedes the realization of a small and compact magnetic disc device.

The present invention especially relates to a half-height type magnetic disc device comprising a swing type actuator and four magnetic discs housed therein. This type of magnetic disc device is described in our co-pending European Patent Application No. 87304907.6 published as EP-A-248,650.

The height dimension of the magnetic disc device is commercially standardized and a full-height type magnetic disc device is marketed. The half-height type magnetic disc device has been developed to realize a small size magnetic disc device which is compatible with the full-height type magnetic disc device, and advantageous from the standpoint of space saving since the height is a half of that of the full-height type magnetic disc device.

On the other hand, when the capacity of the magnetic disc device is to be increased using an ordinary interface circuit, it is desirable to double the number of the discs, from the standpoint of easy installation of a new magnetic disc device having an increased capacity in place of an old device, since it is easy to exchange an old device with a new one and/or simultaneously use a new device with an old one through an ordinary interface circuit. Therefore, a two-disc magnetic disc device was developed as an improvement on a one-disc magnetic disc device. Subsequently, a magnetic disc device comprising four discs has been developed as an improvement on the two-disc device.

The present invention facilitates the housing of four discs in a half-height type magnetic disc device.

In accordance with the present invention a magnetic disc device comprises

a case composed of a base and a cover;

a plurality of magnetic discs housed within the case;

a plurality of magnetic heads for read/write operations and conducting a seeking motion on each magnetic disc; and,

arms for driving the magnetic heads,

characterised in that a recess for accommodating a printed circuit board and including a stepped portion offset towards the inside of the case formed on an outer surface of the base in an area outside of a range of movement of the magnetic heads and arms.

The provision of the recess on the outside of the base and the disposition therein of a printed circuit board for driving the motor, enables a greater number of discs to be accommodated within the case than the prior art structure without increasing its height. This enables four discs to be stacked in the shortened half-height type device housing.

A particular embodiment of a magnetic disc device in accordance with this invention will now be described with reference to the accompanying drawings; in which:-

Figure 1a is a plan with the cover removed;

Figure 1b is a section through the magnetic disc device;

Figure 1c is an under plan with the main printed circuit board removed;

Figure 2 is an exploded perspective view;

Figure 3 is a section showing the bottom plate attached;

Figure 4 is a perspective view of a head arm actuating means of the magnetic disc device; and,

Figure 5 is an exploded perspective view of the head portion of the magnetic disc device.

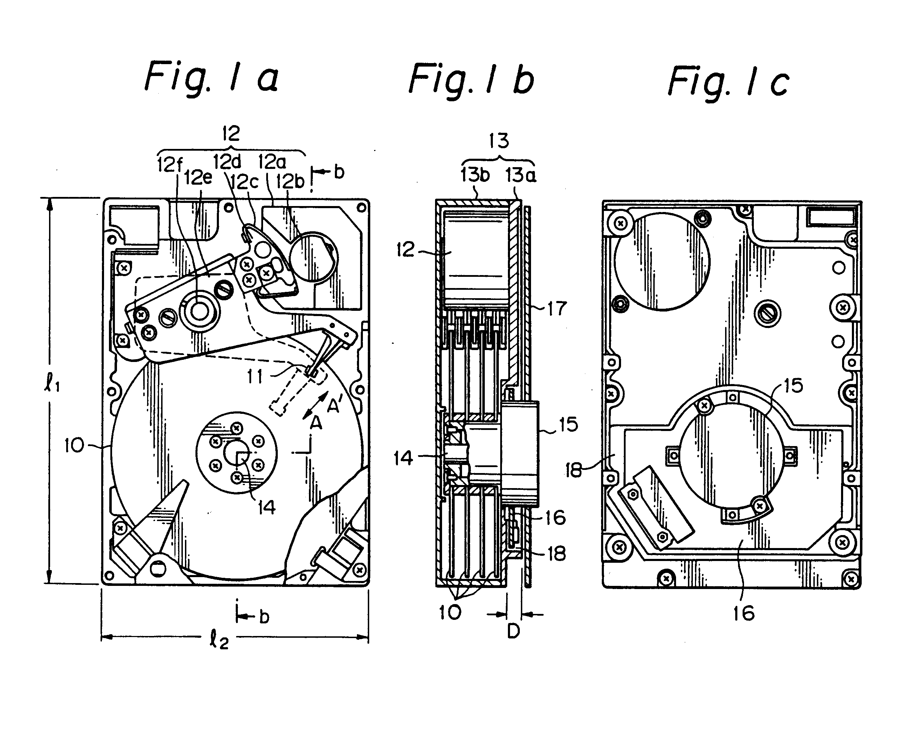

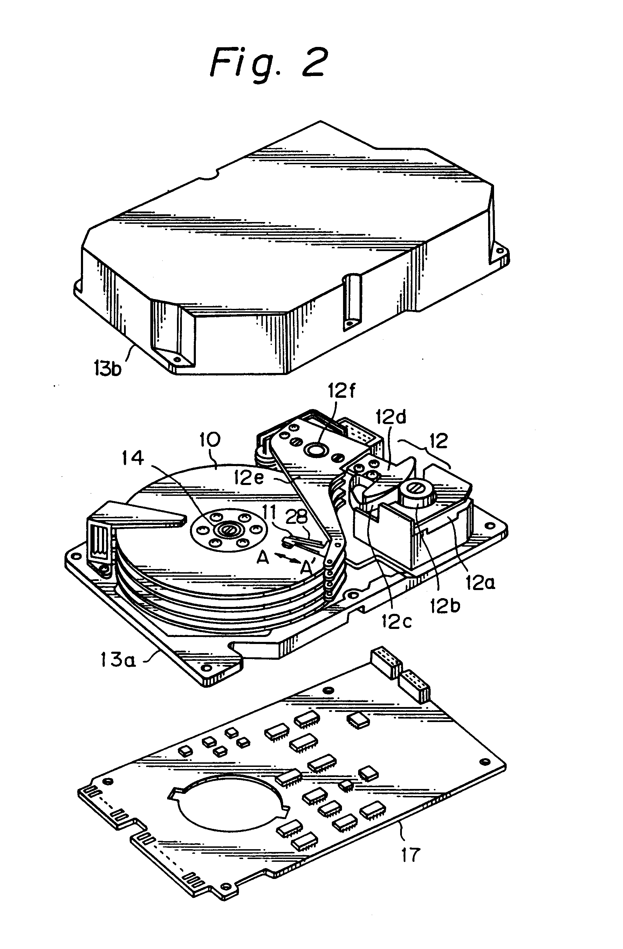

Figures 1 and 2 illustrate an embodiment of the present invention, wherein Figure 1a is a view of the device from above, with the cover thereof removed, Figure 1b is a sectional view along the line b-b of Figure 1a, Figure 1c is a view of the device from below with the main printed circuit board removed, and Figure 2 is a view of the device when disassembled.

As illustrated in Figures 1 and 2, a magnetic disc device according to the present invention comprises: a housing (case 13) formed by a base 13a and a cover 13b; four magnetic discs 10 secured to a spindle 14; eight magnetic heads 11 for magnetic read/write operations at the upper and lower surfaces of each magnetic disc 10; and a head actuator 12 for swinging the magnetic heads 11 in the direction of the arrow AA' on the magnetic disc surface. The head actuator 12 comprises a drive motor 12a, a capstan 12b, a steel belt 12c, a sector 12d, head arms 12e, and a pivot 12f. Outside of the base 13a are disposed a spindle drive motor 15, a sub-printed circuit board 16 for driving the spindle drive motor 15, and a main printed circuit board 17 mounting a read/write circuit for reading data from and writing data to the magnetic disc. A recess 18 is formed on the outside of the base 13a in an area opposite to the head actuator 12 with respect to the spindle drive motor 15. The sub-printed circuit board 16 for driving the motor 15 is disposed in the recess 18 and secured therein with a flange of the motor 15, which flange is also disposed in the recess 18. The magnetic head 11 is attached to an end of the head arm 12e through a gimbal spring and a load spring 28. On the main printed circuit board 17 are mounted an interface circuit, a read/write circuit and a servo control circuit for positioning the magnetic heads 11. It is preferable to dispose a disc spindle drive circuit on the sub-printed circuit board 16, since the sub-printed circuit board 16 is located in the vicinity of the spindle drive motor 15.

With this structure, the sub-printed circuit board 16 can be accommodated without interfering with the head actuator 12 and the magnetic head 11, since the recess 18 is provided on the base 13a at an area opposite to the head actuator 12 with re-

spect to the spindle drive motor 15, outside of the range of movement of the head actuator 12 and the magnetic head 11. Therefore, it is possible to accommodate four magnetic discs 10 without increasing the height of the device housing, and thus realize a compact magnetic disc device having a high memory density.

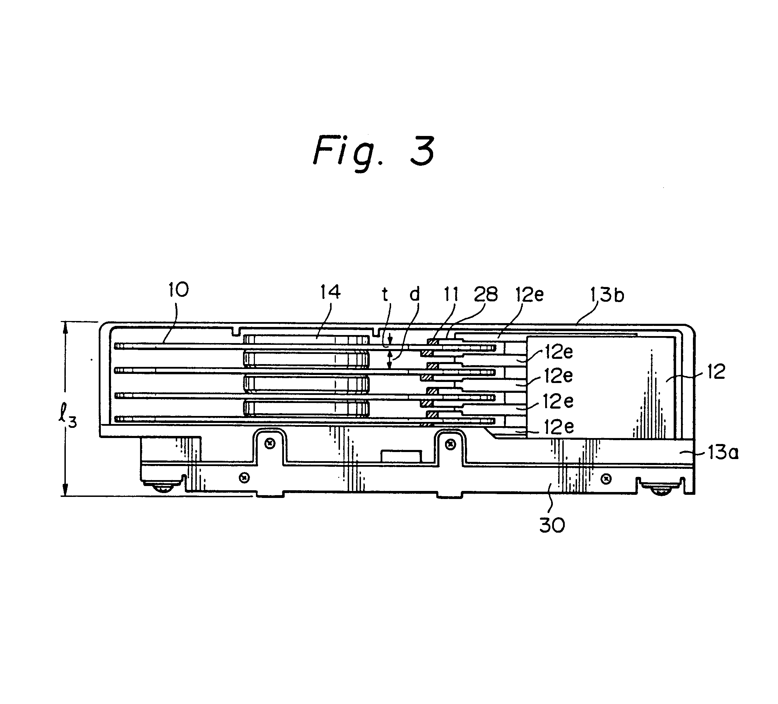

The magnetic disc device illustrated in Fig. 1a is seen from above, with the cover removed, and Fig. 3 shows a vertical section thereof with the bottom plate attached. This magnetic disc device is of a half-height type having a commercially standardized outer shape dimension and using 3.5 inch discs. That is, the disc diameter is 95 mm, the longitudinal length of the device $l_1$ = 146 ± 0.5 mm, the lateral length $l_2$ = 101.6 ± 0.5 mm, and the height $l_3$ = 41.3 ± 0.3 mm. A bottom plate 30 (Fig. 3) for covering the main printed circuit board 17 is disposed below the base 13a and secured thereto together with the main printed circuit board 17 by screws. The height $l_3$ is the dimension between the lowest surface of the bottom plate 30 and the top surface of the cover 13b. The gap d between the adjacent magnetic discs 10 is 4.5 mm, and the thickness t of each magnetic disc 10 is 1.27 mm. Five head arms 12e are arranged to conduct a seeking motion on both surfaces of the four magnetic discs 10, as shown in Fig. 3. The thickness of the two uppermost and lowermost head arms is 2.0 mm, and the thickness of the three intermediate head arms is 2.8 mm. The tip of each head arm 12e is thinned to 1.154 mm to allow the load spring 28 to be attached. The gap between the lower surface of the lowermost magnetic disc 10 and the upper surface of the base 13a is 3.5 mm.

The head arms 12e and the magnetic head 11 conduct a seeking motion, in the direction shown by the arrows A-A', on the disc surface between the position of solid line and the position of dash line, as illustrated in Fig. 1a. Therefore, a space (gap) must be provided to allow movement of the head arm and the magnetic head when seeking the lower surface of the lowermost magnetic disc, between the base 13a and the lowermost disc. However, it is unnecessary to provide such a gap in the area outside of the range of movement of the arm and the head. Therefore, in accordance with the present invention, a recess 18 is formed on the outside (underside) of the base in the area outside of the range of movement of the arm and the head. The inner side (upper side) of the base protrudes inward (upward) corresponding to the thickness of the lowermost arm and the head. The depth D of this recess 18 is 4.7 mm (approximately 5 mm) (Fig. 1b).

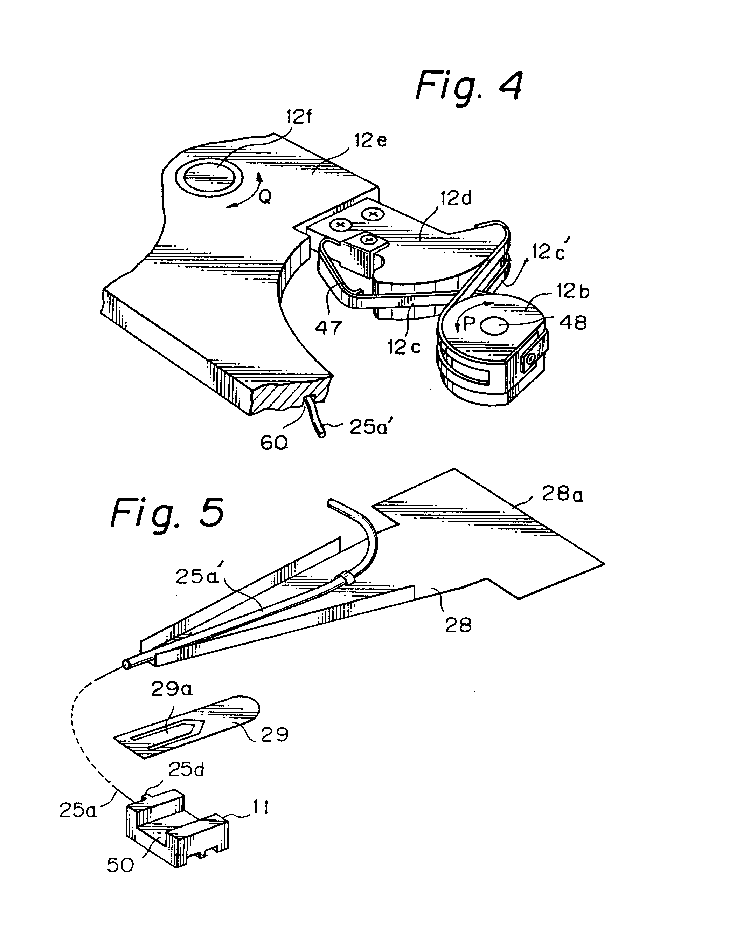

The swing actuator structure of the head arm 12e is illustrated in detail in Fig. 4. The head arm 12e is rotatable about the pivot 12f, as shown by the arrow Q, and a mashroom-shaped sector l2d is secured to the head arm l2e. A capstan l2b is disposed facing and adjacent to the head of the sector l2d. The capstan l2b is rotatable about a shaft 48, as shown by the arrow P, a tension spring 47 is attached to the stem of the sector l2d, and an end of a steel belt l2c is bonded to the tension spring 47. Another steel belt l2c' is secured to the opposite side of the sector l2d. Both steel belts are wound around the capstan l2b and secured thereto at the back thereof by a screw. Both steel belts may be formed as one integral strip. With this structure, the capstan l2b is rotated as shown by the arrow P to swing the sector l2d through the steel belts l2c, l2c', thus rotating the head arm l2c as shown by the arrow Q about the pivot l2f. Numeral 60 designates a groove for holding the lead cable 25a'.

The structure for supporting the magnetic head ll is illustrated in detail in Fig. 5. The load spring 28 is made from a leaf spring. A gimbal 29 also made from a leaf spring is bonded to an end of the load spring 28 by spot welding. A support piece 29a is formed by cutting the inner area of the gimbal 29. The support piece 29a is bonded to an upper recess surface 50 of the magnetic head ll. The magnetic head ll has a core 25d on which a coil (not shown) is wound and the coil lead 25a is taken out therefrom. The coil lead 25a is covered by a protecting outer tube to form a lead cable 25a' from the end portion of the load spring 28. The root portion 28a of the load spring 28 is secured to the end of the head arm l2e (Fig. 2).

As mentioned above, in accordance with the present invention, a compact magnetic disc device with a high memory density is realized with a simple construction, which is very advantageous in practical use.

Also, it is possible to provide a half-height type 3.5 inch magnetic disc device having four discs accommodated therein.

## Claims

1. A magnetic disc device comprising:
    a case (13) composed of a base (13a) and a cover (13b);
    a plurality of magnetic discs (10) housed within the case (13);
    a plurality of magnetic heads (11) for read/write operations and conducting a seeking motion on each magnetic disc (10) surface; and,
    arms (12e) for driving the magnetic heads (11),
    characterised in that a recess (18) for accommodating a printed circuit board (16) and including a stepped portion offset towards the inside of the case is formed on an outer surface of the base (13a) in an area outside of a range of movement of the magnetic heads (11) and arms (12e).

2. A magnetic disc device according to claim 1, wherein a main printed circuit board (17) having a size substantially the same as the base (13a) is attached to the outside of the base and a sub-printed circuit board (16) is accommodated within the recess (18).

3. A magnetic disc device according to claim 2, wherein an interface circuit, a read/write circuit and a servo control circuit for positioning the magnetic heads (11) are all mounted on the main printed circuit board (17) and a disc spindle drive circuit is mounted on the sub-printed circuit board (16).

4. A magnetic disc device according to claim 1, 2 or 3, wherein the magnetic discs (10) are standard 3.5 inch (88 mm) sized discs.

5. A magnetic disc device according to claim 4, wherein the device is of the half-height type and accommodates four magnetic discs.

6. A magnetic disc device according to claim 3, 4 or 5 wherein :
    a motor (15) for driving a spindle (14) of the magnetic discs (10) is mounted with the main printed circuit board (17) outside of the base (13a) of the case (13), and a head actuator (12b, 12c) is housed with the magnetic discs (10) and the magnetic heads (11) within the case (13),
    the recess (18) being provided on an outer surface of the base (13a) in an area opposite to the head actuator (12b, 12c) with respect to the spindle drive motor (15).

7. A magnetic disc device according to any one of the preceding claims, wherein each of said magnetic heads is mounted at a free end of the corresponding arm, and said arms are rotated to drive said magnetic heads.

8. A magnetic disc device according to claim 6 or 7 wherein :
    the head actuator (12b, 12c) is mounted on an inner surface of said base; and
    the motor (15) for rotating the magnetic discs, is mounted on the outer surface of said base (13a) at a level which is offset inside of said case with respect to a level at which said actuator (12b, 12c)is mounted on the inner surface of said base in an area outside of a range of movement of said arms and said magnetic heads.

**Revendications**

1. Dispositif à disque magnétique comportant:

   un boîtier (13) comportant un socle (13a) et un capot (13b);

   une série de disques magnétiques (10) situés dans le boîtier (13);

   une série de têtes magnétiques (11 à fonctions lecture / écriture et assurant un mouvement de recherche sur chaque surface de disque (10);

   des bras(12e) d'entraînement de têtes magnétiques(11),

   caractérisé en ce qu'un congé (18) pour loger une plaquette de circuit imprimé (16) et comportant une portion en décalage vers l'intérieur du boîtier est formée sur une surface extérieure du socle (13a) dans une zone hors de l'éventail de mouvement des têtes magnétiques (11) et des bras (12e).

2. Dispositif à disque magnétique suivant la revendication 1, dans lequel une plaquette principale de circuit imprimé (17) de grandeur essentiellement la même que celle du socle (13a) est fixée à l'extérieur du socle et une plaquette secondaire de circuit imprimé (16) est logée dans le congé (18).

3. Dispositif à disque magnétique suivant la revendication 2, dans lequel un circuit d'interface, un circuit de lecture / écriture et un circuit de servocommande pour situer les têtes magnétiques (11) sont tous montés sur la plaquette principale de circuit imprimé (17) et un circuit d'entraînement d'axe de disque est monté sur la plaquette secondaire de circuit imprimé (16).

4. Dispositif à disque magnétique suivant les revendications 1, 2 ou 3, dans lequel les disques magnétiques (10) sont des disques de série mesurant 88mm (3,5 in.).

5. Dispositif à disque magnétique suivant la revendication 4, selon lequel le dispositif est du modèle de demi-hauteur et admet quatre disques magnétiques.

6. Dispositif à disque magnétique suivant la revendication 3, 4 ou 5 selon lequel:

   un moteur (15) d'entraînement d'axe (14) des disques magnétiques (10) est monté avec la plaquette principale de circuit imprimé (17) à l'extérieur du socle (13a) de boîtier (13), et un actionneur de tête (12b,12c) est logé dans le boîtier (13) avec les disques magnétiques (10) et les têtes magnétiques (11)

le congé (18) étant prévu sur une surface extérieure du socle (13a) dans une zone face à l'actionneur de tête (12b,12c) par rapport au moteur d'entraînement d'axe (15).

7. Dispositif à disque magnétique suivant l'une ou l'autre des revendications précédentes, dans lequel chacune desdites têtes magnétiques est montée à l'extrémité libre du bras correspondant, lesdits bras étant mis en rotation pour entraîner lesdites têtes magnétiques.

8. Dispositif à disque magnétique suivant la revendication 6 ou 7, dans lequel:

   l'actionneur de tête (12b, 12c) est monté sur une surface intérieure dudit socle; et

   le moteur (15) de rotation des disques magnétiques est monté sur une surface extérieure dudit socle (13a) à un niveau décalé à l'intérieur dudit boîtier par rapport au niveau de pose dudit actionneur (12b,12c) sur la surface intérieure dudit socle dans une zone à l'extérieur de l'éventail de mouvement desdits bras et desdites têtes magnétiques.

**Patentansprüche**

1. Magnetplattenvorrichtung mit:

   einem Gehäuse (13), das aus einer Basis (13a) und einer Abdeckung (13b) besteht;

   einer Vielzahl von Magnetplatten (10), die in dem Gehäuse (13) untergebracht sind;

   einer Vielzahl von Magnetköpfen (11), für Lese/Schreib-Betriebe und zum Durchführen einer Suchbewegung auf jeder Magnetplattenoberfläche (10); und,

   Armen (12e) zum Treiben der Magnetköpfe (11),

   dadurch gekennzeichnet, daß eine Ausnehmung (18), zur Aufnahme einer gedruckten Schaltungskarte (16) und mit einem abgestuften Abschnitt, der zu der Innenseite des Gehäuses hin versetzt ist, auf einer äußeren Oberfläche der Basis (13a) in einem Bereich außerhalb eines Bewegungsbereiches der Magnetköpfe (11) und der Arme (12e) ausgebildet ist.

2. Magnetplattenvorrichtung nach Anspruch 1, bei der eine gedruckte Hauptschaltungskarte (17), welche im wesentlichen dieselbe Größe wie die Basis (13a) hat, an der Außenseite der Basis befestigt ist, und eine gedruckte Sub-Schaltungskarte (16) innerhalb der Ausnehmung (18) aufgenommen ist.

3. Magnetplattenvorrichtung nach Anspruch 2, bei der eine schnittstellenschaltung, eine Lese/Schreib-Schaltung und eine Servo-Steuerschaltung zum Positionieren der Magnetköpfe (11) alle auf der gedruckten Hauptschaltungskarte (17) montiert sind, und eine Plattenspindel-Antriebsschaltung auf der gedruckten Sub-Schaltungskarte (16) montiert ist.

4. Magnetplattenvorrichtung nach Anspruch 1, 2 oder 3, bei der die Magnetplatten (10) Platten mit Standardgröße 3,5 Zoll (88 mm) sind.

5. Magnetplattenvorrichtung nach Anspruch 4, bei der die Vorrichtung vom Typ halber Höhe ist und vier Magnetplatten aufnimmt.

6. Magnetplattenvorrichtung nach Anspruch 3, 4 oder 5, bei der:
ein Motor (15) zum Treiben einer Spindel (14) der Magnetplatten (10) mit der gedruckten Hauptschaltungskarte (17) außerhalb der Basis (13a) des Gehäuses (13) montiert ist, und ein Kopfbetätiger (12b, 12c) mit den Magnetplatten (10) und den Magnetköpfen (11) innerhalb des Gehäuses (13) aufgenommen ist,
die Ausnehmung (18) an der äußeren Oberfläche der Basis (13a) in einem Bereich gegenüber dem Kopfbetätiger (12b, 12c) in Bezug auf den Spindelantriebsmotor (15) vorgesehen ist.

7. Magnetplattenvorrichtung nach einem der vorhergehenden Ansprüche, bei der jeder der magnetischen Köpfe an einem freien Ende des entsprechenden Arms montiert ist, und die genannten Arme zum Treiben der genannten Magnetköpfe rotiert werden.

8. Magnetplattenvorrichtung nach Anspruch 6, bei der:
der Kopfbetätiger (12b, 12c) auf einer inneren Oberfläche der genannten Basis montiert ist; und
der Motor (15) zum Rotieren der Magnetplatten auf der äußeren Oberfläche der genannten Basis (13a) auf einem Pegel montiert ist, der innerhalb des genannten Gehäuses in Bezug auf einen Pegel versetzt ist, bei welchem der Betätiger (12b, 12c) an der inneren Oberfläche der Basis in einem Bereich außerhalb eines Bewegungsbereichs der Arme und der Magnetköpfe montiert ist.

# Fig. 1 a

# Fig. 1 b

# Fig. 1 c

EP 0 253 626 B1

# *Fig. 2*

Fig. 3

*Fig. 4*

*Fig. 5*